# EUROPÄISCHE PATENTSCHRIFT

(11) **EP 2 676 322 B1**
(45) Veröffentlichungstag und Bekanntmachung des Hinweises auf die Patenterteilung: **21.02.2018**
(21) Anmeldenummer: 11771102.8
(22) Anmeldetag: 13.10.2011
(51) Int. Cl.: H01P 5/02, H03B 5/18, H03B 9/14, H01R 24/46, H01R 107/00, H02K 29/00

(54) **HF-GENERATOR**
HF GENERATOR
GÉNÉRATEUR HF

(30) Priorität: 28.03.2011 DE 102011006209
(43) Veröffentlichungstag der Anmeldung: 25.12.2013
(73) Patentinhaber: Siemens Aktiengesellschaft, 80333 München (DE)
(72) Erfinder: HEID, Oliver, 91052 Erlangen (DE); HUGHES, Timothy, 91056 Erlangen (DE)
(86) Internationale Anmeldenummer: PCT/EP2011/067900
(87) Internationale Veröffentlichungsnummer: WO 2012/130343

(56) Entgegenhaltungen:
- EP-A2- 0 455 485
- GB-A- 2 032 715
- US-A- 2 641 658
- US-A- 3 743 966
- US-A1- 2005 242 901
- HEID O ET AL: "Compact Solid State Direct drive RF Linac", PROCEEDINGS OF IPAC (2010) KYOTO, JAPAN, , 23. Mai 2010 (2010-05-23), Seiten 4278-4280, XP002658698, ISBN: 978-92-9083-352-9 Gefunden im Internet: URL:http://accelconf.web.cern.ch/AccelConf /IPAC10/papers/thpd002.pdf [gefunden am 2011-09-08]

## Beschreibung

Die vorliegende Erfindung betrifft einen HF-Generator zur Erzeugung von HF-Leistung gemäß dem Oberbegriff des Patentanspruchs 1.

Es ist bekannt, HF-Generatoren modular aus einer Mehrzahl von HF-Modulen aufzubauen. Konventionelle modulare HF-Generatoren benutzen HF-Module, die beispielsweise mittels eines Koaxialkabels an einen Leistungssummierer (Combiner) angeschlossen sind. Dabei ist es üblicherweise erforderlich, die Ausgangsimpedanz jedes HF-Moduls an die Leitungsimpedanz des Koaxialkabels anzupassen. Innerhalb des Leistungssummierers ist üblicherweise eine weitere Impedanztransformation notwendig. Die Impedanztransformationen werden üblicherweise mit frequenzselektiven Bauteilen erreicht. Dadurch sind konventionelle HF-Generatoren schmalbandig

US-A-2641658 offenbart einen HF-Generator nach dem Oberbegriff des Anspruchs 1.

Aufgabe der vorliegenden Erfindung ist es, einen HF-Generator bereitzustellen, bei dem eine zweimalige Impedanztransformation nicht erforderlich ist. Diese Aufgabe wird durch einen HF-Generator mit den kennzeichnenden Merkmalen des Anspruchs 1 gelöst. Bevorzugte Weiterbildungen sind in den abhängigen Ansprüchen angegeben.

Ein erfindungsgemäßer HF-Generator umfasst einen ersten Festkörperschalter und einen zweiten Festkörperschalter, wobei jeder der Festkörperschalter einen ersten Ausgangsanschluss und einen zweiten Ausgangsanschluss aufweist und dazu ausgebildet ist, einen hochfrequenten elektrischen Strom zwischen dem ersten Ausgangsanschluss und dem zweiten Ausgangsanschluss zu schalten. Weiter umfasst der HF-Generator eine Koaxialleitung mit einem ersten Leiter und einem zweiten Leiter, wobei die Koaxialleitung eine Längsrichtung, die einer Erstreckungsrichtung der Koaxialleitung entspricht, und eine radiale Richtung, die senkrecht zur Längsrichtung orientiert ist, festlegt. Dabei weist der erste Leiter in Längsrichtung der Koaxialleitung aufeinanderfolgend einen ersten Abschnitt und einen zweiten Abschnitt auf, die durch eine erste Unterbrechungsstelle voneinander getrennt sind. Dabei ist der erste Ausgangsanschluss des ersten Festkörperschalters leitend mit dem zweiten Leiter und der zweite Ausgangsanschluss des ersten Festkörperschalters leitend mit dem ersten Abschnitt verbunden. Außerdem ist der erste Ausgangsanschluss des zweiten Festkörperschalters leitend mit dem ersten Abschnitt und der zweite Ausgangsanschluss des zweiten Festkörperschalters leitend mit dem zweiten Abschnitt verbunden.

Vorteilhafterweise sind bei diesem HF-Generator die Festkörperschalter in den Leistungssummierer integriert. Dabei kann eine Impedanzanpassung von der optimalen Lastimpedanz der Festkörperschalter an die Impedanz der Koaxialleitung durch Reihenschaltung der Festkörperschalter geschehen. Dadurch wird die Notwendigkeit von Impedanztransformationen umgangen.

Bevorzugt ist der erste Festkörperschalter in einer ersten Kammer angeordnet, die durch eine in radiale Richtung der Koaxialleitung verlaufende erste Kammerwand und eine in radiale Richtung der Koaxialleitung verlaufende zweite Kammerwand begrenzt wird. Vorteilhafterweise wird der erste Festkörperschalter dadurch vom Potential der durch die Koaxialleitung ausgegebenen Ausgangsspannung entkoppelt.

Besonders bevorzugt ist der zweite Festkörperschalter in einer zweiten Kammer angeordnet, die durch eine in radiale Richtung der Koaxialleitung verlaufende dritte Kammerwand und eine in radiale Richtung der Koaxialleitung verlaufende vierte Kammerwand begrenzt wird. Vorteilhafterweise ist dann auch der zweite Festkörperschalter vom Potential der Ausgangsspannung der Koaxialleitung entkoppelt.

Es ist zweckmäßig, dass die zweite Kammerwand und die dritte Kammerwand einstückig ausgebildet sind. Vorteilhafterweise werden die erste Kammer und die zweite Kammer dann durch eine gemeinsame Kammerwand voneinander getrennt. Dies erlaubt eine platzsparende Ausführung des HF-Generators.

Bevorzugt wird die zweite Kammer in radialer Richtung der Koaxialleitung durch den ersten Leiter und durch eine Mantelwand begrenzt. Vorteilhafterweise ist der zweite Festkörperschalter dann vollständig durch die Wände der zweiten Kammer umschlossen.

In einer Weiterbildung des HF-Generators ist die zweite Kammer mit einem dielektrischen oder ferroelektrischen Material gefüllt. Vorteilhafterweise kann dadurch erreicht werden, dass die Amplituden von in den Kammerwänden fließenden Strömen vernachlässigbar klein gegenüber dem Ausgangsstrom der Koaxialleitung werden.

Besonders bevorzugt weist der zweite Festkörperschalter einen ersten Versorgungsanschluss auf, der mit einer ersten Versorgungsleitung verbunden ist, und einen zweiten Versorgungsanschluss auf, der mit einer zweiten Versorgungsleitung verbunden ist. Dabei ist die erste Versorgungsleitung abschnittsweise parallel zur dritten Kammerwand und die zweite Versorgungsleitung abschnittsweise parallel zur vierten Kammerwand angeordnet. Vorteilhafterweise kann der zweite Festkörperschalter dann durch dieselbe Versorgungs-Gleichspannung mit elektrischer Leistung versorgt werden, wie die übrigen Festkörperschalter des HF-Generators.

In einer Ausführungsform des HF-Generators ist der erste Leiter ein Außenleiter und der zweite Leiter ein Innenleiter der Koaxialleitung.

Bevorzugt sind die Festkörperschalter dann in radialer Richtung der Koaxialleitung außerhalb des ersten Leiters angeordnet.

In einer anderen Ausführungsform des HF-Generators ist der erste Leiter ein Innenleiter und der zweite Leiter ein Außenleiter der Koaxialleitung.

Bevorzugt sind die Festkörperschalter dann in radialer Richtung der Koaxialleitung innerhalb des ersten Leiters angeordnet.

In einer Weiterbildung des HF-Generators ist ein dritter Festkörperschalter mit dem ersten Festkörperschalter oder mit dem zweiten Festkörperschalter parallel geschaltet. Vorteilhafterweise lässt sich dann eine höhere Ausgangsleistung des HF-Generators erzielen. Ebenfalls vorteilhaft ist, dass die Lastimpedanz des dritten Festkörperschalters dann ebenfalls an die Impedanz der koaxialen Ausgangsleitung angepasst sein kann.

In einer zusätzlichen Weiterbildung des HF-Generators weist der erste Leiter einen dem zweiten Abschnitt in Längsrichtung der Koaxialleitung nachfolgenden dritten Abschnitt auf, der durch eine zweite Unterbrechungsstelle vom zweiten Abschnitt getrennt ist, wobei ein erster Ausgangsanschluss eines vierten Festkörperschalters leitend mit dem zweiten Abschnitt und ein zweiter Ausgangsanschluss des vierten Festkörperschalters leitend mit dem dritten Abschnitt verbunden ist. Vorteilhafterweise lassen sich beim erfindungsgemäßen HF-Generator durch Fortsetzung der Kaskade weitere Festkörperschalter in Reihe schalten. Dadurch lässt sich die Ausgangsleistung des HF-Generators erhöhen.

Es ist zweckmäßig, dass sich die Wellenimpedanz der Koaxialleitung an der ersten Unterbrechungsstelle sprunghaft ändert.

In einer Ausführungsform der Erfindung ändert sich der Radius des ersten Leiters an der ersten Unterbrechungsstelle. Vorteilhafterweise lässt sich dadurch eine sprunghafte Änderung der Wellenimpedanz der Koaxialleitung erreichen.

In einer anderen Ausführungsform des HF-Generators ändert sich ein Dielektrikum der Koaxialleitung an der ersten Unterbrechungsstelle. Vorteilhafterweise lässt sich auch dadurch eine sprunghafte Änderung der Wellenimpedanz der Koaxialleitung an der ersten Unterbrechungsstelle erreichen.

Bevorzugt entspricht die Änderung der Wellenimpedanz an der ersten Unterbrechungsstelle etwa einer Lastimpedanz des zweiten Festkörperschalters. Vorteilhafterweise lässt sich der zweite Festkörperschalter dann mit seiner optimalen Lastimpedanz betreiben.

Es ist zweckmäßig, dass die Änderung der Wellenimpedanz an der ersten Unterbrechungsstelle etwa 10 Ohm beträgt. Vorteilhafterweise kann der zweite Festkörperschalter dann mit einer Lastimpedanz von 10 Ohm betrieben werden. Alternativ können der zweite Festkörperschalter und ein dem zweiten Festkörperschalter parallelgeschalteter weiterer Festkörperschalter mit einer Impedanz von je 20 Ohm betrieben werden.

Die Erfindung wird nun anhand der beigefügten Figuren näher erläutert. Dabei zeigen:
- Figur 1: eine schematische Darstellung eines HF-Generators gemäß einer ersten Ausführungsform; und
- Figur 2: eine schematische Darstellung eines HF-Generators gemäß einer zweiten Ausführungsform.

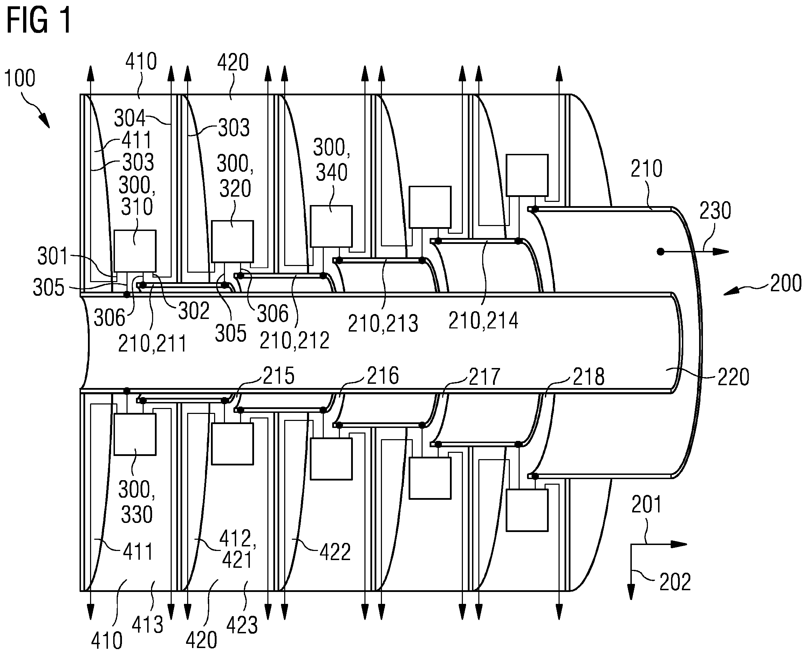

Figur 1 zeigt eine schematische Schnittdarstellung eines HF-Generators 100 gemäß einer ersten Ausführungsform. Der HF-Generator 100 dient zur Erzeugung von HF-Leistung, also zur Erzeugung eines hochfrequenten elektrischen Signals.

Der HF-Generator 100 weist eine Mehrzahl von Festkörperschaltern 300 zur Erzeugung von HF-Leistung auf. Jeder der Festkörperschalter 300 ist ein zur Erzeugung von HF-Leistung geeignetes HF-Modul. Der in der nachfolgenden Beschreibung und den Patentansprüchen verwendete Begriff "Festkörperschalter" ist in diesem Sinne nicht einschränkend zu verstehen.

Jeder der Festkörperschalter 300 weist einen ersten Versorgungsanschluss 301 und einen zweiten Versorgungsanschluss 302 auf. Jeder erste Versorgungsanschluss 301 ist mit einer ersten Versorgungsleitung 303 verbunden. Jeder zweite Versorgungsanschluss 302 ist mit einer zweiten Versorgungsleitung 304 verbunden. Über die Versorgungsleitungen 303, 304 können die Festkörperschalter 300 mit einer Versorgungs-Gleichspannung zum Betrieb der Festkörperschalter 300 versorgt werden. Außerdem weist jeder der Festkörperschalter 300 einen ersten Ausgangsanschluss 305 und einen zweiten Ausgangsanschluss 306 auf. Jeder der Festkörperschalter 300 ist dazu ausgebildet, einen hochfrequenten elektrischen Strom zwischen seinem ersten Ausgangsanschluss 305 und seinem zweiten Ausgangsanschluss 306 zu schalten.

Der HF-Generator 100 umfasst außerdem eine Koaxialleitung 200, die zur Summierung der durch die Festkörperschalter 300 erzeugten HF-Leistung und zur Weiterleitung des summierten HF-Signals dient. Die Koaxialleitung 200 umfasst einen ersten Leiter 210, der einen Außenleiter der Koaxialleitung bildet, und einen zweiten Leiter 220, der einen Innenleiter der Koaxialleitung 200 bildet. Der erste Leiter 210 ist in radialer Richtung außen um den zweiten Leiter 220 angeordnet. Der erste Leiter 210 und der zweite Leiter 220 bestehen jeweils aus einem elektrisch leitenden Material, bevorzugt aus einem Metall. Die Koaxialleitung 200 weist einen Ausgang 230 auf, an dem die durch den HF-Generator 100 erzeugte und summierte HF-Leistung ausgegeben wird.

Die Koaxialleitung 200 legt eine Längsrichtung 201, die der Erstreckungsrichtung der Koaxialleitung 200 entspricht, und eine radiale Richtung 202, die senkrecht zur Längsrichtung 201 orientiert ist, fest.

Der erste Leiter 210 der Koaxialleitung 200 ist in Längsrichtung 201 in einen ersten Abschnitt 211, einen zweiten Abschnitt 212, einen dritten Abschnitt 213 und einen vierten Abschnitt 214 unterteilt. Es können auch mehr oder weniger als vier Abschnitte 211, 212, 213, 214 vorgesehen sein. Der erste Abschnitt 201 ist durch eine erste Unterbrechungsstelle 215 vom zweiten Abschnitt 212 getrennt. Der zweite Abschnitt 212 ist durch eine zweite Unterbrechungsstelle 216 vom dritten Abschnitt 213 getrennt. Der dritte Abschnitt 213 ist durch eine dritte Unterbrechungsstelle 217 vom vierten Abschnitt 214 getrennt. Der vierte Abschnitt 214 ist durch eine vierte Unterbrechungsstelle 218 von einem nachfolgenden fünften Abschnitt des ersten Leiters 210 getrennt. Die Unterbrechungsstellen 215, 216, 217, 218 können beispielsweise als umlaufende Ringschlitze ausgebildet sein.

Jeder der Festkörperschalter 300 ist in radialer Richtung 202 der Koaxialleitung 200 außerhalb des ersten Leiters 210 angeordnet. Der erste Ausgangsanschluss 305 eines ersten Festkörperschalters 310 ist elektrisch leitend mit dem zweiten Leiter 220 der Koaxialleitung 200 verbunden. Der zweite Ausgangsanschluss 306 des ersten Festkörperschalters 310 ist elektrisch leitend mit dem ersten Abschnitt 211 des ersten Leiters 210 der Koaxialleitung 200 verbunden. Der erste Ausgangsanschluss 305 eines zweiten Festkörperschalters 320 ist elektrisch leitend mit dem ersten Abschnitt 211 des ersten Leiters 210 der Koaxialleitung 200 verbunden. Der zweite Ausgangsanschluss 306 des zweiten Festkörperschalters 320 ist elektrisch leitend mit dem zweiten Abschnitt 212 des ersten Leiters 210 der Koaxialleitung 200 verbunden. Der zweite Festkörperschalter 320 ist also über der ersten Unterbrechungsstelle 215 angeordnet. Der erste Festkörperschalter 310 und der zweite Festkörperschalter 320 sind in Reihe geschaltet.

Der erste Ausgangsanschluss 305 eines dritten Festkörperschalters 330 ist elektrisch leitend mit dem zweiten Leiter 220 der Koaxialleitung 200 verbunden. Der zweite Ausgangsanschluss 306 des dritten Festkörperschalters 330 ist elektrisch leitend mit dem ersten Abschnitt 211 des ersten Leiters 210 der Koaxialleitung 200 verbunden. Der dritte Festkörperschalter 330 ist dem ersten Festkörperschalter 310 also parallel geschaltet. Es könnten weitere Festkörperschalter 300 vorgesehen sein, die dem ersten Festkörperschalter 310 und dem dritten Festkörperschalter 330 ebenfalls parallel geschaltet sind. Der dritte Festkörperschalter 330 könnte jedoch auch entfallen.

Der erste Ausgangsanschluss 305 eines vierten Festkörperschalters 340 ist elektrisch leitend mit dem zweiten Abschnitt 212 des ersten Leiters 210 der Koaxialleitung 200 verbunden. Der zweite Ausgangsanschluss 206 des vierten Festkörperschalters 340 ist elektrisch leitend mit dem dritten Abschnitt 213 des ersten Leiters 210 der Koaxialleitung 200 verbunden. Der vierte Festkörperschalter 340 ist somit über der zweiten Unterbrechungsstelle 216 angeordnet. Der vierte Festkörperschalter 340 ist mit dem ersten Festkörperschalter 310 und dem zweiten Festkörperschalter 320 in Reihe geschaltet. Der vierte Festkörperschalter 340 könnte auch entfallen. Der HF-Generator 100 kann aber auch noch weitere Festkörperschalter 300 umfassen, die über der dritten Unterbrechungsstelle 217, der vierten Unterbrechungsstelle 218 und über weiteren Unterbrechungsstellen des ersten Leiters 210 der Koaxialleitung 200 angeordnet und mit dem ersten Festkörperschalter 310 und dem zweiten Festkörperschalter 320 in Reihe geschaltet sind. Der HF-Generator 100 kann außerdem weitere Festkörperschalter 300 umfassen, die dem zweiten Festkörperschalter 320 und/oder dem vierten Festkörperschalter 340 parallel geschaltet sind.

Der HF-Generator 100 umfasst demnach mindestens den ersten Festkörperschalter 310 und den zweiten Festkörperschalter 320. Weitere Festkörperschalter 300 können diesen Festkörperschaltern 310, 320 parallel geschaltet sein. Außerdem kann der HF-Generator 100 weitere Kaskadenelemente mit weiteren Festkörperschaltern 300 aufweisen, die mit dem ersten Festkörperschalter 310 und dem zweiten Festkörperschalter 320 in Reihe geschaltet sind.

An jeder der Unterbrechungsstellen 215, 216, 217, 218 ändert sich die Wellenimpedanz der Koaxialleitung 200 sprunghaft. In der in Figur 1 beispielhaft dargestellten Ausführungsform wird dies dadurch erreicht, dass sich an den Unterbrechungsstellen 215, 216, 217, 218 jeweils der Radius des ersten Leiters 210 ändert. Es ist jedoch nicht zwingend notwendig, dass die Radiusänderungen genau an den Unterbrechungsstellen erfolgen. Die Positionen der Radiusänderung des ersten Leiters 210 und die Positionen der Unterbrechungsstellen 215, 216, 217, 218 des ersten Leiters 210 können in Längsrichtung 201 der Koaxialleitung 200 auch gegeneinander versetzt sein. Alternativ kann der Radius des ersten Leiters 210 in Längsrichtung 201 der Koaxialleitung 200 auch konstant sein. In diesem Fall kann die Änderung der Wellenimpedanz zwischen den Abschnitten 211, 212, 213, 214 des ersten Leiters 210 durch Änderungen eines Dielektrikums der Koaxialleitung 200 erreicht werden.

Bevorzugt entspricht die Änderung der Wellenimpedanz der Koaxialleitung 200 an jeder der Unterbrechungsstellen 215, 216, 217, 218 der Lastimpedanz eines über der jeweiligen Unterbrechungsstelle 215, 216, 217, 218 angeordneten Festkörperschalters 300 oder, im Fall mehrerer über eine Unterbrechungsstelle 215, 216, 217, 218 parallel geschalteter Festkörperschalter 300, der Lastimpedanz der Parallelschaltung von Festkörperschaltern 300. Dadurch wird die Notwendigkeit einer Impedanztransformation zwischen dem Festkörperschalter 300 und der Koaxialleitung 200 vermieden. Falls beispielsweise jeder der Festkörperschalter 300 eine Ausgangsspannung von 200 V und einen Ausgangsstrom vom 10 A aufweist und falls an jeder der Unterbrechungsstellen 215, 216, 217, 218 zwei Festkörperschalter 300 parallel geschaltet sind, so sollte die Änderung der Wellenimpedanz der Koaxialleitung 200 an jeder der Unterbrechungsstellen 215, 216, 217, 218 etwa 10 Ohm betragen.

Der erste Festkörperschalter 310 und der dritte Festkörperschalter 330 sind in einer ersten Kammer 410 angeordnet. Die erste Kammer 410 wird in Längsrichtung 201 der Koaxialleitung 200 durch eine in radiale Richtung 202 der Koaxialleitung 200 verlaufende erste Kammerwand 411 und eine parallel zur ersten Kammerwand 411 verlaufende zweite Kammerwand 412 begrenzt. Die erste Kammerwand 411 besteht aus einem elektrisch leitfähigen Material, bevorzugt aus einem Metall, und ist elektrisch leitend mit dem zweiten Leiter 220 verbunden. Die zweite Kammerwand 412 besteht ebenfalls aus einem leitenden Material und ist leitend mit dem ersten Abschnitt 211 des ersten Leiters 210 verbunden. In radialer Richtung 202 außen wird die erste Kammer 410 durch eine Mantelwand 413 der ersten Kammer 410 begrenzt. Die Mantelwand 413 ist zylindermantelförmig ausgebildet und besteht aus einem elektrisch leitenden Material. Die Mantelwand 413 ist elektrisch leitend mit der ersten Kammerwand 411 und der zweiten Kammerwand 412 verbunden. In radiale Richtung 202 innen wird die erste Kammer 410 durch einen Teil des ersten Abschnitts 211 des ersten Leiters 210 und durch einen Teil des Leiters 220 der Koaxialleitung 200 begrenzt.

Die erste Versorgungsleitung 303 des ersten Festkörperschalters 310 verläuft parallel zur ersten Kammerwand 411 der ersten Kammer 410 radial nach außen. Die zweite Versorgungsleitung 304 des ersten Festkörperschalters 310 verläuft parallel zur zweiten Kammerwand 412 innerhalb der ersten Kammer 410 radial nach außen. Die Versorgungsleitungen 303, 304 des dritten Festkörperschalters 330, der ebenfalls in der ersten Kammer 410 angeordnet ist, verlaufen entsprechend. Bevorzugt befinden sich die Versorgungsleitungen 303, 304 möglichst nahe oder in unmittelbarem Kontakt zu den Kammerwänden 411, 412. Dadurch wird erreicht, dass die Festkörperschalter 310, 330 vom Potential der Ausgangsspannung entkoppelt sind.

Der zweite Festkörperschalter 320 ist in einer zweiten Kammer 420 angeordnet, die durch eine erste Kammerwand 421 und eine zweite Kammerwand 422 der zweiten Kammer 420 in Längsrichtung 201 begrenzt wird. Die erste Kammerwand 421 und die zweite Kammerwand 422 der zweiten Kammer 420 verlaufen wiederum in radiale Richtung 202 der Koaxialleitung 200. Bevorzugt bildet die erste Kammerwand 421 der zweiten Kammer 420 gleichzeitig die zweite Kammerwand 412 der ersten Kammer 410. Die zweite Kammer 420 wird in radiale Richtung 202 nach außen wiederum durch eine Mantelwand 423 der zweiten Kammer 420 begrenzt, während sie in radiale Richtung 202 nach innen durch einen Teil des ersten Abschnitts 211 des ersten Leiters 210 und einen Teil des zweiten Abschnitts 212 des zweiten Leiters 210 begrenzt wird. Die erste Versorgungsleitung 303 des zweiten Festkörperschalters 320 verläuft parallel zur ersten Kammerwand 421 der zweiten Kammer 420. Die zweite Versorgungsleitung 304 des zweiten Festkörperschalters 320 verläuft parallel zur zweiten Kammerwand 422 der zweiten Kammer 422. Bevorzugt befinden sich die Versorgungsleitungen 303, 304 des zweiten Festkörperschalters 320 in unmittelbarem Kontakt zu den Kammerwänden 421, 422 der zweiten Kammer 420.

Der vierte Festkörperschalter 340, der an der zweiten Unterbrechungsstelle 216 des ersten Leiters 210 angeordnet ist, befindet sich entsprechend in einer dritten Kammer. Alle weiteren in Serie geschalteten Festkörperschalter 300 befinden sich ebenfalls jeweils in entsprechenden Kammern. Durch die Anordnung der Festkörperschalter 300 in Kammern 410, 420 wird erreicht, dass die Festkörperschalter 300 von dem Potential der Ausgangsspannung der Koaxialleitung 200 entkoppelt sind. Dadurch können alle Festkörperschalter 300 durch gemeinsame Versorgungs-Gleichspannungen über ihre jeweiligen Versorgungsleitungen 303, 304 versorgt werden. Die Kammern 410, 420 können mit dielektrischen oder ferromagnetischen Füllmaterialien gefüllt sein.

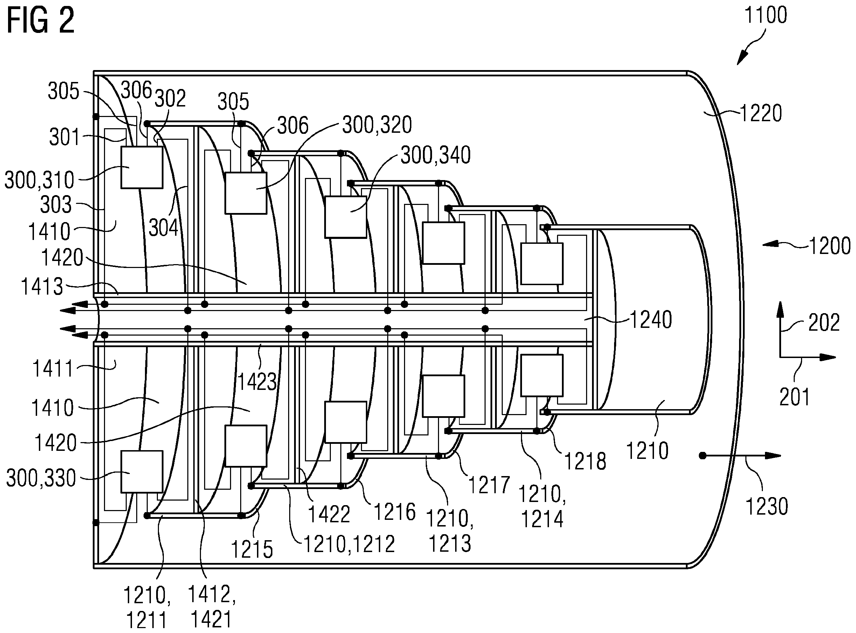

Figur 2 zeigt in schematischer Schnittdarstellung einen HF-Generator 1100 gemäß einer zweiten Ausführungsform. Der HF-Generator 1100 der zweiten Ausführungsform dient wie der HF-Generator 100 der ersten Ausführungsform zur Erzeugung von HF-Leistung.

Der HF-Generator 1100 weist wiederum eine Mehrzahl von Festkörperschaltern 300 auf, die den Festkörperschaltern 300 des HF-Generators 100 der Figur 1 entsprechen. Außerdem weist der HF-Generator 1100 eine Koaxialleitung 1200 auf, die zur Summierung der durch die Festkörperschalter 300 erzeugten HF-Leistung und zur Weiterleitung der summierten HF-Leistung zu einem Ausgang 1230 dient.

Die Koaxialleitung 1200 umfasst einen ersten Leiter 1210, der einen Innenleiter der Koaxialleitung 1200 bildet. Außerdem umfasst die Koaxialleitung 1200 einen zweiten Leiter 1220, der einen Außenleiter der Koaxialleitung 1200 bildet. Die Koaxialleitung 1200 definiert wiederum eine Längsrichtung 201 und eine radiale Richtung 202. Die Längsrichtung 201 entspricht der Längserstreckungsrichtung der Koaxialleitung 1200. Der zweite Leiter 1220 ist in radialer Richtung außen um den ersten Leiter 1210 angeordnet.

Der erste Leiter 1210 umfasst einen ersten Abschnitt 1211, einen zweiten Abschnitt 1212, einen dritten Abschnitt 1213 und einen vierten Abschnitt 1214. Der erste Abschnitt 1211 des ersten Leiters 1210 ist durch eine erste Unterbrechungsstelle 1215 vom zweiten Abschnitt 1212 getrennt. Der zweite Abschnitt 1212 des ersten Leiters 1210 ist durch eine zweite Unterbrechungsstelle 1216 vom dritten Abschnitt 1213 getrennt. Der dritte Abschnitt 1213 des ersten Leiters 1210 ist durch eine dritte Unterbrechungsstelle 1217 vom vierten Abschnitt 1214 getrennt. Die Unterbrechungsstellen 1215, 1216, 1217 können jeweils als umlaufende Ringschlitze ausgebildet sein. Es können auch mehr oder weniger als vier Abschnitte 1211, 1212, 1213, 1214 vorgesehen sein, die jeweils durch Unterbrechungsstellen 1215, 1216, 1217 voneinander getrennt sind.

Die Festkörperschalter 300 des HF-Generator 1100 sind in radialer Richtung 202 innerhalb des ersten Leiters 1210 angeordnet. Der erste Leiter 1210 ist also als Hohlkörper ausgebildet.

Der erste Ausgangsanschluss 305 eines ersten Festkörperschalters 310 des HF-Generators 1100 ist elektrisch leitend mit dem zweiten Leiter 1220 verbunden. Der zweite Ausgangsanschluss 306 des ersten Festkörperschalters 310 ist elektrisch leitend mit dem ersten Abschnitt 1211 des ersten Leiters 1210 der Koaxialleitung 1200 verbunden. Der erste Ausgangsanschluss 305 eines zweiten Festkörperschalters 320 der Koaxialleitung 1200 ist elektrisch leitend mit dem ersten Abschnitt 1211 des ersten Leiters 1210 verbunden. Der zweite Ausgangsanschluss 306 des zweiten Festkörperschalters 320 ist elektrisch leitend mit dem zweiten Abschnitt 1212 des ersten Leiters 1210 verbunden. Der zweite Festkörperschalter 320 ist also über die erste Unterbrechungsstelle 1215 angeordnet. Der erste Festkörperschalter 310 und der zweite Festkörperschalter 320 sind in Reihe geschaltet.

Der erste Ausgangsanschluss 305 eines dritten Festkörperschalter 330 des HF-Generators 1100 ist elektrisch leitend mit dem zweiten Leiter 1220 der Koaxialleitung 1200 verbunden. Der zweite Ausgangsanschluss 306 des dritten Festkörperschalters 330 ist elektrisch leitend mit dem ersten Abschnitt 1211 des ersten Leiters 1210 der Koaxialleitung 1200 verbunden. Der dritte Festkörperschalter 330 ist also mit dem ersten Festkörperschalter 310 parallel geschaltet.

Der erste Ausgangsanschluss 305 eines vierten Festkörperschalters 340 ist elektrisch leitend mit dem zweiten Abschnitt 1212 des ersten Leiters 1210 verbunden. Der zweite Ausgangsanschluss 306 des vierten Festkörperschalters 340 ist elektrisch leitend mit dem dritten Abschnitt 1213 des ersten Leiters 1210 verbunden. Der vierte Festkörperschalter 340 ist also mit dem ersten Festkörperschalter 310 und dem zweiten Festkörperschalter 320 in Reihe geschaltet. Der vierte Festkörperschalter 340 ist über der zweiten Unterbrechungsstelle 1216 des ersten Leiters 1210 der Koaxialleitung 1200 angeordnet.

Der HF-Generator 1100 kann weitere Festkörperschalter 300 umfassen, die über den weiteren Unterbrechungsstellen 1217 angeordnet und mit dem ersten Festkörperschalter 310, dem zweiten Festkörperschalter 320 und dem vierten Festkörperschalter 340 in Serie geschaltet sind. Außerdem kann der HF-Generator 1100 weitere Festkörperschalter 300 umfassen, die mit dem ersten Festkörperschalter 310, dem zweiten Festkörperschalter 320 und dem vierten Festkörperschalter 340 parallel geschaltet sind. Der vierte Festkörperschalter 340 kann aber auch entfallen.

Die Wellenimpedanz der Koaxialleitung 1200 ändert sich an jeder der Unterbrechungsstellen 1215, 1216, 1217 sprungartig. Dies kann, wie in Figur 2 schematisch dargestellt, dadurch erreicht werden, dass sich der Radius des ersten Leiters 1210 an jeder der Unterbrechungsstellen 1215, 1216, 1217 sprunghaft ändert. Alternativ kann anstelle einer Änderung des Radius des ersten Leiters 1210 der Koaxialleitung 1200 sich an jeder der Unterbrechungsstellen 1215, 1216, 1217 ein Dielektrikum der Koaxialleitung 1200 ändern. Wie bereits anhand der Figur 1 erläutert, müssen die Positionen der Änderungen der Wellenimpedanz der Koaxialleitung 1200 in Längsrichtung 201 nicht mit den Unterbrechungsstellen 1215, 1216, 1217 zusammenfallen, sondern können in Längsrichtung 201 auch gegen diese verschoben sein. Erforderlich ist lediglich, dass sich zwischen zwei Abschnitten 1211, 1212, 1213, 1214 des ersten Leiters 1210 die Wellenimpedanz der Koaxialleitung 1200 ändert. Bevorzugt sind die Änderungen der Wellenimpedanz der Koaxialleitung 1200 so bemessen, dass sie der Ausgangsimpedanz der über eine Unterbrechungsstelle 1215, 1216, 1217 parallel geschalteten Festkörperschalter 300 entsprechen.

Der erste Leiter 1210 der Koaxialleitung 1200 weist einen axialen Hohlraum 1240 auf, der sich entlang der Längsachse des ersten Leiters 1210 erstreckt und durch eine Mantelfläche begrenzt wird. Die Festkörperschalter 300 sind zwischen der Mantelfläche des axialen Hohlraums 1240 und der äußeren Mantelfläche des ersten Leiters 1210 angeordnet.

Der erste Festkörperschalter 310 und der dritte Festkörperschalter 330 sind in einer ersten Kammer 1410 angeordnet. Die erste Kammer 1410 wird in Längsrichtung 201 der Koaxialleitung 1200 durch eine erste Kammerwand 1411 und eine zweite Kammerwand 1412 der ersten Kammer 1410 begrenzt. Die erste Kammerwand 1411 und die zweite Kammerwand 1412 verlaufen senkrecht zur Längsrichtung 201 der Koaxialleitung 1200. Die erste Kammerwand 1411 ist elektrisch leitend mit der Mantelwand des axialen Hohlraums 1240 des ersten Leiters 1210 und elektrisch leitend mit dem zweiten Leiter 1220 der Koaxialleitung 1200 verbunden, schließt den ersten Leiter 1210 und den zweiten Leiter 1220 also miteinander kurz. Die zweite Kammerwand 1412 der ersten Kammer 1410 ist elektrisch leitend mit der Mantelfläche des axialen Hohlraums 1240 und elektrisch leitend mit dem ersten Abschnitt 1211 des ersten Leiters 1210 verbunden. Die erste Kammer 1410 wird in radialer Richtung 202 nach innen außerdem durch einen Abschnitt 1413 der Mantelwand des axialen Hohlraums 1240 und nach außen durch einen Teil des ersten Abschnitts 1211 des ersten Leiters 1210 begrenzt. Die erste Versorgungsleitung 303 des ersten Festkörperschalters 310 verläuft parallel zur ersten Kammerwand 1411 in der ersten Kammer 1410 in Richtung des axialen Hohlraums 1240, verläuft weiter durch den Abschnitt 1413 der Mantelwand des axialen Hohlraums 1240 in den axialen Hohlraum 1240. Die zweite Versorgungsleitung 304 des ersten Festkörperschalters 310 verläuft parallel zur zweiten Kammerwand 1412 der ersten Kammer 1410 durch den Abschnitt 1413 der Mantelwand des axialen Hohlraums 1240 in den axialen Hohlraum 1240. Die Versorgungsleitungen 303, 304 des ersten Festkörperschalter 310 sind möglichst nahe an den Kammerwänden 1411, 1412 der ersten Kammer 1410 angeordnet. Der zweite Festkörperschalter 320 ist in analoger Weise ebenfalls in der ersten Kammer 1410 angeordnet.

Der zweite Festkörperschalter 320 ist in einer zweiten Kammer 1420 angeordnet, die sich zwischen der Mantelfläche des axialen Hohlraums 1240 und der äußeren Mantelfläche des ersten Leiters 1210 erstreckt. In Längsrichtung 201 der Koaxialleitung 1200 wird die zweite Kammer 1420 durch eine erste Kammerwand 1421 und eine zweite Kammerwand 1422 begrenzt, die senkrecht zur Längsrichtung 201 verlaufen. Die erste Kammerwand 1421 der zweiten Kammer 1420 ist bevorzugt identisch mit der zweiten Kammerwand 1412 der ersten Kammer 1410. Die erste Kammerwand 1421 der zweiten Kammer 1420 ist elektrisch leitend mit der Mantelfläche des axialen Hohlraums 1240 des ersten Leiters 1210 und elektrisch leitend mit dem ersten Abschnitt 1211 des ersten Leiters 1210 verbunden. Die zweite Kammerwand 1422 der zweiten Kammer 1420 ist elektrisch leitend mit der Mantelfläche des axialen Hohlraums 1240 des ersten Leiters 1210 und elektrisch leitend mit dem zweiten Abschnitt 1212 des ersten Leiters 1210 verbunden. In radialer Richtung 202 wird die zweite Kammer 1420 nach außen durch einen Teil des ersten Abschnitts 1211 des ersten Leiters 1210 und einen Teil des zweiten Abschnitts 1212 des ersten Leiters 1210 begrenzt. In radialer Richtung 202 nach innen wird die zweite Kammer 1420 durch einen Abschnitt 1423 der Mantelwand des axialen Hohlraums 1240 begrenzt. Die Versorgungsleitungen 303, 304 des zweiten Festkörperschalters 320 verlaufen wieder parallel zu den Kammerwänden 1421, 1422 möglichst nahe an den Kammerwänden 1421, 1422 und erstrecken sich in den axialen Hohlraum 1240. Über den axialen Hohlraum 1240 werden die Festkörperschalter 300 mit einer Versorgungs-Gleichspannung versorgt.

Weitere mit dem ersten Festkörperschalter 310 und dem zweiten Festkörperschalter 320 in Reihe geschaltete Festkörperschalter 300 befinden sich in entsprechenden Kammern 1410, 1420. Die Kammern 1410, 1420 bewirken, dass die Festkörperschalter 300 von dem Potential der durch die Koaxialleitung 1200 am Ausgang 1230 ausgegebenen Spannung entkoppelt sind. Die Kammern 1410, 1420 können mit einem dielektrischen oder ferromagnetischen Füllmaterial gefüllt sein.

Beim HF-Generator 100 der Figur 1 weist der Außenleiter 210 der Koaxialleitung 200 Abschnitte 211, 212, 213, 214 auf, die durch Unterbrechungsstellen 215, 216, 217, 218 voneinander getrennt sind. Beim HF-Generator 1100 der Figur 2 weist der Innenleiter 1210 der Koaxialleitung 1200 Abschnitte 1211, 1212, 1213 auf, die durch Unterbrechungsstellen 1215, 1216, 1217 voneinander getrennt sind. In einer weiteren Ausführungsform des erfindungsgemäßen HF-Generators weisen sowohl der Innenleiter als auch der Außenleiter eines Koaxialkabels Abschnitte auf, die durch Unterbrechungsstellen voneinander getrennt sind.

## Patentansprüche

1. HF-Generator (100, 1100)
mit einem ersten Festkörperschalter (300, 310) und einem zweiten Festkörperschalter (300, 320), wobei jeder der Festkörperschalter (300, 310, 320) einen ersten Ausgangsanschluss (305) und einen zweiten Ausgangsanschluss (306) aufweist und dazu ausgebildet ist, einen hochfrequenten elektrischen Strom zwischen dem ersten Ausgangsanschluss (305) und dem zweiten Ausgangsanschluss (306) zu schalten, und mit einer Koaxialleitung (200, 1200) mit einem ersten Leiter (210, 1210) und einem zweiten Leiter (220, 1220), wobei die Koaxialleitung (200, 1200) eine Längsrichtung (201), die einer Erstreckungsrichtung der Koaxialleitung (200, 1200) entspricht, und eine radiale Richtung (202), die senkrecht zur Längsrichtung (201) orientiert ist, festlegt,
**dadurch gekennzeichnet,**
**dass** der erste Leiter (210, 1210) in Längsrichtung (201) der Koaxialleitung (200, 1200) aufeinanderfolgend einen ersten Abschnitt (211, 1211) und einen zweiten Abschnitt (212, 1212) aufweist, die durch eine erste Unterbrechungsstelle (215, 1215) voneinander getrennt sind,
wobei der erste Ausgangsanschluss (305) des ersten Festkörperschalters (300, 310) leitend mit dem zweiten Leiter (220, 1220) und der zweite Ausgangsanschluss (306) des ersten Festkörperschalters (300, 310) leitend mit dem ersten Abschnitt (211, 1211) verbunden ist,
wobei der erste Ausgangsanschluss (305) des zweiten Festkörperschalters (300, 320) leitend mit dem ersten Abschnitt (211, 1211) und der zweite Ausgangsanschluss (306) des zweiten Festkörperschalters (300, 320) leitend mit dem zweiten Abschnitt (212, 1212) verbunden ist.

2. HF-Generator (100, 1100) gemäß Anspruch 1,
wobei der erste Festkörperschalter (300, 310) in einer ersten Kammer (410, 1410) angeordnet ist, die durch eine in der radialen Richtung (202) verlaufende erste Kammerwand (411, 1411) und eine in der radialen Richtung (202) verlaufende zweite Kammerwand (412, 1412) begrenzt wird.

3. HF-Generator (100, 1100) gemäß einem der vorhergehenden Ansprüche,
wobei der zweite Festkörperschalter (300, 320) in einer zweiten Kammer (420, 1420) angeordnet ist, die durch eine in der radialen Richtung (202) verlaufende dritte Kammerwand (421, 1421) und eine in der radialen Richtung (202) verlaufende vierte Kammerwand (422, 1422) begrenzt wird.

4. HF-Generator (100, 1100) gemäß Ansprüchen 2 und 3, wobei die zweite Kammerwand (212, 1412) und die dritte Kammerwand (421, 1421) einstückig ausgebildet sind.

5. HF-Generator (100, 1100) gemäß einem der Ansprüche 3 oder 4,
wobei die zweite Kammer (420, 1420) in der radialen Richtung (202) durch den ersten Leiter (210, 1210) und durch eine Mantelwand (423, 1423) begrenzt wird.

6. HF-Generator (100, 1100) gemäß einem der Ansprüche 3 bis 5,
wobei die zweite Kammer (420, 1420) mit einem dielektrischen oder ferromagnetischen Material gefüllt ist.

7. HF-Generator (100, 1100) gemäß einem der Ansprüche 3 bis 6,
wobei der zweite Festkörperschalter (300, 320) einen ersten Versorgungsanschluss (301) aufweist, der mit einer ersten Versorgungsleitung (303) verbunden ist,
und einen zweiten Versorgungsanschluss (302) aufweist, der mit einer zweiten Versorgungsleitung (304 verbunden ist, wobei die erste Versorgungsleitung (303) abschnittsweise parallel zur dritten Kammerwand (421, 1421) und die zweite Versorgungsleitung (422, 1422) abschnittsweise parallel zur vierten Kammerwand (422, 1422) verläuft.

8. HF-Generator (100) gemäß einem der vorhergehenden Ansprüche,
wobei der erste Leiter (210) ein Außenleiter und der zweite Leiter (220) ein Innenleiter der Koaxialleitung (200) ist.

9. HF-Generator (100) gemäß Anspruch 8,
wobei die Festkörperschalter (300) in der radialen Richtung (202) der Koaxialleitung (200) außerhalb des ersten Leiters (210) angeordnet sind.

10. HF-Generator (1100) gemäß einem der Ansprüche 1 bis 7, wobei der erste Leiter (1210) ein Innenleiter und der zweite Leiter (1220) ein Außenleiter der Koaxialleitung (1200) ist.

11. HF-Generator (1100) gemäß Anspruch 10,
wobei die Festkörperschalter (300) in der radialen Richtung (202) der Koaxialleitung (1200) innerhalb des ersten Leiters (1210) angeordnet sind.

12. HF-Generator (100, 1100) gemäß einem der vorhergehenden Ansprüche,
wobei ein dritter Festkörperschalter (300, 330) mit dem ersten Festkörperschalter (300, 310) oder mit dem zweiten Festkörperschalter (300, 320) parallel geschaltet ist.

13. HF-Generator (100, 1100) gemäß einem der vorhergehenden Ansprüche,
wobei der erste Leiter (210, 1210) einen dem zweiten Abschnitt (212, 1212) in Längsrichtung (201) der Koaxialleitung (200, 1200) nachfolgenden dritten Abschnitt (213, 1213) aufweist, der durch eine zweite Unterbrechungsstelle (216) vom zweiten Abschnitt (212, 1212) getrennt ist, wobei ein erster Ausgangsanschluss (305) eines vierten Festkörperschalters (300, 340) leitend mit dem zweiten Abschnitt (212, 1212) und ein zweiter Ausgangsanschluss (306) des vierten Festkörperschalters (300, 340) leitend mit dem dritten Abschnitt (213, 1213) verbunden ist.

14. HF-Generator (100, 1100) gemäß einem der vorhergehenden Ansprüche,
wobei sich die Wellenimpedanz der Koaxialleitung (200, 1200) an der ersten Unterbrechungsstelle (215) sprunghaft ändert.

15. HF-Generator (100, 1100) gemäß Anspruch 14,
wobei sich der Radius des ersten Leiters (210, 1210) an der ersten Unterbrechungsstelle (215) ändert.

16. HF-Generator (100, 1100) gemäß einem der Ansprüche 14 oder 15,
wobei sich ein Dielektrikum der Koaxialleitung (200, 1200) an der ersten Unterbrechungsstelle (215) ändert.

17. HF-Generator (100, 1100) gemäß einem der Ansprüche 14 bis 16,
wobei die Änderung der Wellenimpedanz an der ersten Unterbrechungsstelle (215) etwa einer Lastimpendanz des zweiten Festkörperschalters (300, 320) entspricht.

18. HF-Generator (100, 1100) gemäß einem der Ansprüche 14 bis 17,
wobei die Änderung der Wellenimpedanz an der ersten Unterbrechungsstelle (215) etwa 10 Ohm beträgt.

## Claims

1. HF generator (100, 1100)
having a first solid-state switch (300, 310) and a second solid-state switch (300, 320), wherein each of the solid-state switches (300, 310, 320) has a first output connector (305) and a second output connector (306) and is designed to switch a high-frequency electrical current between the first output connector (305) and the second output connector (306),
and having a coaxial cable (200, 1200) with a first conductor (210, 1210) and a second conductor (220, 1220), wherein the coaxial line (200, 1200) defines a longitudinal direction (201), which corresponds to an extension direction of the coaxial line (200, 1200), and a radial direction (202), which is oriented perpendicular to the longitudinal direction (201), **characterized in that**
the first conductor (210, 1210) successively has a first section (211, 1211) and a second section (212, 1212) in the longitudinal direction (201) of the coaxial cable (200, 1200) which are separated from one another by a first break point (215, 1215),
wherein the first output connector (305) of the first solid-state switch (300, 310) is conductively connected to the second conductor (220, 1220), and the second output connector (306) of the first solid-state switch (300, 310) is conductively connected to the first section (211, 1211), wherein the first output connector (305) of the second solid-state switch (300, 320) is conductively connected to the first section (211, 1211), and the second output connector (306) of the second solid-state switch (300, 320) is conductively connected to the second section (212, 1212).

2. HF generator (100, 1100) according to Claim 1,
wherein the first solid-state switch (300, 310) is arranged in a first chamber (410, 1410) which is bounded by a first chamber wall (411, 1411) running in the radial direction (202) and a second chamber wall (412, 1412) running in the radial direction (202).

3. HF generator (100, 1100) according to one of the preceding claims,
wherein the second solid-state switch (300, 320) is arranged in a second chamber (420, 1420) which is bounded by a third chamber wall (421, 1421) running in the radial direction (202) and a fourth chamber wall (422, 1422) running in the radial direction (202).

4. HF generator (100, 1100) according to Claims 2 and 3,
wherein the second chamber wall (212, 1412) and the third chamber wall (421, 1421) are designed as one piece.

5. HF generator (100, 1100) according to one of Claims 3 or 4,
wherein the second chamber (420, 1420) is bounded in the radial direction (202) by the first conductor (210, 1210) and by a sleeve wall (423, 1423).

6. HF generator (100, 1100) according to one of Claims 3 to 5,
wherein the second chamber (420, 1420) is filled with a dielectric or ferromagnetic material.

7. HF generator (100, 1100) according to one of Claims 3 to 6, wherein the second solid-state switch (300, 320) has a first supply connector (301), which is connected to a first supply cable (303),
and a second supply connector (302), which is connected to a second supply cable (304),
wherein sections of the first supply cable (303) run parallel to the third chamber wall (421, 1421) and sections of the second supply cable (304) run parallel to the fourth chamber wall (422, 1422).

8. HF generator (100) according to one of the preceding claims,
wherein the first conductor (210) is an outer conductor and the second conductor (220) an inner conductor of the coaxial cable (200).

9. HF generator (100) according to Claim 8,
wherein the solid-state switches (300) are arranged outside the first conductor (210) in the radial direction (202) of the coaxial cable (200).

10. HF generator (1100) according to one of Claims 1 to 7, wherein the first conductor (1210) is an inner conductor and the second conductor (1220) an outer conductor of the coaxial cable (1200).

11. HF generator (1100) according to Claim 10,
wherein the solid-state switches (300) are arranged inside the first conductor (1210) in the radial direction (202) of the coaxial cable (1200).

12. HF generator (100, 1100) according to one of the preceding claims,
wherein a third solid-state switch (300, 330) is connected in parallel with the first solid-state switch (300, 310) or with the second solid-state switch (300, 320).

13. HF generator (100, 1100) according to one of the preceding claims,
wherein the first conductor (210, 1210) has a third section (213, 1213) which follows the second section (212, 1212) in the longitudinal direction (201) of the coaxial cable (200, 1200) and is separated from the second section (212, 1212) by a second break point (216),
wherein a first output connector (305) of a fourth solid-state switch (300, 340) is conductively connected to the second section (212, 1212), and a second output connector (306) of the fourth solid-state switch (300, 340) is conductively connected to the third section (213, 1213).

14. HF generator (100, 1100) according to one of the preceding claims,
wherein the wave impedance of the coaxial cable (200, 1200) changes abruptly at the first break point (215).

15. HF generator (100, 1100) according to Claim 14,
wherein the radius of the first conductor (210, 1210) changes at the first break point (215).

16. HF generator (100, 1100) according to one of Claims 14 or 15,
wherein a dielectric of the coaxial cable (200, 1200) changes at the first break point (215).

17. HF generator (100, 1100) according to one of Claims 14 to 16,
wherein the change in wave impedance at the first break point (215) corresponds approximately to a load impedance of the second solid-state switch (300, 320).

18. HF generator (100, 1100) according to one of Claims 14 to 17,
wherein the change in wave impedance at the first break point (215) is approximately 10 ohms.

## Revendications

1. Générateur à haute fréquence (100, 1100)
avec un premier commutateur à solide (300, 310) et un deuxième commutateur à solide (300, 320), chacun des commutateurs à solide (300, 310, 320) présentant une première connexion de sortie (305) et une deuxième connexion de sortie (306) et étant configuré pour commuter un courant électrique haute fréquence entre la première connexion de sortie (305) et la deuxième connexion de sortie (306), et avec une ligne coaxiale (200, 1200) ayant un premier conducteur (210, 1210) et un deuxième conducteur (220, 1220), la ligne coaxiale (200, 1200) fixant une direction longitudinale (201), laquelle correspond à une direction d'extension de la ligne coaxiale (200, 1200), ainsi qu'une direction radiale (202), laquelle est orientée à la perpendiculaire de la direction longitudinale (201),
**caractérisé en ce que**
le premier conducteur (210, 1210) présente dans la direction longitudinale (201) de la ligne coaxiale (200, 1200) de manière successive une première section (211, 1211) et une deuxième section (212, 1212), lesquelles sont séparées l'une de l'autre par un point d'interruption (215, 1215),
la première connexion de sortie (305) du premier commutateur à solide (300, 310) étant reliée à conduction avec le deuxième conducteur (220, 1220) et la deuxième connexion de sortie (306) du premier commutateur à solide (300, 310) l'étant à conduction avec la première section (211, 1211),
la première connexion de sortie (305) du deuxième commutateur à solide (300, 320) étant reliée à conduction avec la première section (211, 1211) et la deuxième connexion de sortie (306) du deuxième commutateur à solide (300, 320) l'étant à conduction avec la deuxième section (212, 1212).

2. Générateur à haute fréquence (100, 1100) selon la revendication 1,
le premier commutateur à solide (300, 310) étant agencé dans une première chambre (410, 1410) délimitée par une première paroi de chambre (411, 1411) courant dans la direction radiale (202) et une deuxième paroi de chambre (412, 1412) courant dans la direction radiale (202).

3. Générateur à haute fréquence (100, 1100) selon l'une des revendications précédentes,
le deuxième connecteur à solide (300, 320) étant agencé dans une deuxième chambre (420, 1420), laquelle est délimitée par une troisième paroi de chambre (421, 1421) courant dans la direction radiale (202) et une quatrième paroi de chambre (422, 1422) courant dans la direction radiale (202).

4. Générateur à haute fréquence (100, 1100) selon les revendications 2 et 3, la deuxième paroi de chambre (212, 1412) et la troisième paroi de chambre (421, 1421) étant exécutées d'un seul tenant.

5. Générateur à haute fréquence (100, 1100) selon l'une des revendications 3 ou 4,
la deuxième chambre (420, 1420) étant délimitée dans la direction radiale (202) par le premier conducteur (210, 1210) et par une paroi de gaine (423, 1423).

6. Générateur à haute fréquence (100, 1100) selon l'une des revendications 3 à 5,
la deuxième chambre (420, 1420) étant remplie d'une matière diélectrique ou ferromagnétique.

7. Générateur à haute fréquence (100, 1100) selon l'une des revendications 3 à 6,
le deuxième commutateur à solide (300, 320) présentant une première connexion d'alimentation (301), laquelle est reliée à une première ligne d'alimentation (303),
et présentant une deuxième connexion d'alimentation (302), laquelle est reliée à une deuxième ligne d'alimentation (304),
la première ligne d'alimentation (303) courant par sections parallèlement à la troisième paroi de chambre (421, 1421) et la deuxième ligne d'alimentation (422, 1422) courant par sections parallèlement à la quatrième paroi de chambre (422, 1422) .

8. Générateur à haute fréquence (100) selon l'une des revendications précédentes,
le premier conducteur (210) étant un conducteur extérieur et le deuxième conducteur (220) étant un conducteur intérieur de la ligne coaxiale (200).

9. Générateur à haute fréquence (100) selon la revendication 8,
le commutateur à solide (300) étant agencé dans la direction radiale (202) de la ligne coaxiale (200) à l'extérieur du premier conducteur (210).

10. Générateur à haute fréquence (1100) selon l'une des revendications 1 à 7,
le premier conducteur (1210) étant un conducteur intérieur et le deuxième conducteur (1220) étant un conducteur extérieur de la ligne coaxiale (1200).

11. Générateur à haute fréquence (1100) selon la revendication 10,
le commutateur à solide (300) étant agencé dans la direction radiale (202) de la ligne coaxiale (1200) à l'intérieur du premier conducteur (1210).

12. Générateur à haute fréquence (100, 1100) selon l'une des revendications précédentes,
un troisième connecteur à solide (300, 330) étant commuté avec le premier commutateur à solide (300, 310) ou avec le deuxième commutateur à solide (300, 320) en parallèle.

13. Générateur à haute fréquence (100, 1100) selon l'une des revendications précédentes,
le premier conducteur (210, 1210) présentant une troisième section (213, 1213) suivant la deuxième section (212, 1212) dans la direction longitudinale (201) de la ligne coaxiale (200, 1200), laquelle est séparée de la deuxième section (212, 1212) par un deuxième point d'interruption (216), une première connexion de sortie (305) d'un quatrième connecteur à solide (300, 340) étant reliée à conduction avec la deuxième section (212, 1212) et une deuxième connexion de sortie (306) du quatrième commutateur à solide (300, 340) l'étant à conduction avec la troisième section (213, 1213).

14. Générateur à haute fréquence (100, 1100) selon l'une des revendications précédentes,
l'impédance d'onde de la ligne coaxiale (200, 1200) se modifiant par bonds au premier point d'interruption (215).

15. Générateur à haute fréquence (100, 1100) selon la revendication 14,
le rayon du premier conducteur (210, 1210) se modifiant au premier point d'interruption (215).

16. Générateur à haute fréquence (100, 1100) selon l'une des revendications 14 ou 15,
un diélectrique de la ligne coaxiale (200, 1200) se modifiant au premier point d'interruption (215).

17. Générateur à haute fréquence (100, 1100) selon l'une des revendications 14 à 16,
la modification de l'impédance d'onde au premier point d'interruption (215) correspondant à peu près à l'impédance en charge du deuxième commutateur à solide (300, 320).

18. Générateur à haute fréquence (100, 1100) selon l'une des revendications 14 à 17,
la modification de l'impédance d'onde au premier point d'interruption (215) valant environ 10 Ohms.
